# EUROPÄISCHE PATENTSCHRIFT

(11) **EP 3 485 236 B1**
(45) Veröffentlichungstag und Bekanntmachung des Hinweises auf die Patenterteilung: **01.12.2021**
(21) Anmeldenummer: 17728163.1
(22) Anmeldetag: 01.06.2017
(51) Int. Cl.: G01F 11/04, G01F 11/08, B05B 11/00, B05B 11/04

(54) **PUMPKOPF SOWIE DOSIERVORRICHTUNG**
PUMP HEAD AND DOSING DEVICE
TÊTE DE POMPE ET DISPOSITIF DE DOSAGE

(30) Priorität: 14.07.2016 DE 102016212893
(43) Veröffentlichungstag der Anmeldung: 22.05.2019
(73) Patentinhaber: F. Holzer GmbH, 66386 St. Ingbert (DE)
(72) Erfinder: LEE, Hyeck-Hee, 66386 St. Ingbert (DE); STEINFELD, Ute, 66386 St. Ingbert (DE); MAHLER, Markus, 66333 Völklingen (DE); HOLZER, Frank, 66386 St. Ingbert (DE)
(74) Vertreter: Pfenning, Meinig & Partner mbB
(86) Internationale Anmeldenummer: PCT/EP2017/063342
(87) Internationale Veröffentlichungsnummer: WO 2018/010889

(56) Entgegenhaltungen:
- EP-A1- 1 084 764
- EP-A1- 1 164 362
- EP-A1- 2 383 553
- DE-A1- 3 102 346
- US-A- 3 401 719
- US-A- 3 759 425
- US-A1- 2011 240 677

## Beschreibung

Die vorliegende Erfindung betrifft einen Pumpkopf, der eine dosierte Abgabe von Fluiden ermöglicht. Zudem betrifft die vorliegende Erfindung eine Dosiervorrichtung, die beispielsweise als Quetschflasche ausgebildet sein kann, wobei die Dosiervorrichtung einen erfindungsgemäßen Pumpkopf umfasst.

Aus dem Stand der Technik sind Dosiersysteme bekannt, wie beispielsweise Quetschflaschen, Non-Airless-Systeme oder Airless-Systeme. Diese Systeme zeichnen sich durch eine portionsweise Dosierung von abzugebendem Fluid oder durch kontinuierliche Abgabe von Fluid bei Applikation eines entsprechenden Drucks auf die Dosiervorrichtung aus.

Insbesondere bei Quetschflaschen ist es jedoch nach wie vor von Nachteil, dass eine dosierte Abgabe von Flüssigkeiten nicht möglich ist. Solange ein Benutzer Druck auf die Quetschflasche ausübt, wird diese das zu dosierende Fluid abgeben. Bei unachtsamer Handhabung, beispielsweise bei Applikation eines Überdrucks durch den Nutzer auf die Quetschflasche kann dies dazu führen, dass unbeabsichtigt zu viel Flüssigkeit aus einer entsprechenden Dosiervorrichtung austritt.

Die US 3 759 425 A offenbart einen Pumpkopf ausgeführt zum Einsatz in einer Dosiervorrichtung gemäß dem Stand der Technik.

Aufgabe der vorliegenden Erfindung ist es daher, einen Pumpkopf, insbesondere für ein Quetschflaschen-Dosiersystem anzugeben, mit dem eine dosierte Abgabe des enthaltenen Fluids aus einer Dosiervorrichtung, insbesondere einer mit dem Pumpkopf versehenen Quetschflasche, ermöglicht wird.

Diese Aufgabe wird hinsichtlich eines Pumpkopfes mit den Merkmalen des Patentanspruchs 1, hinsichtlich einer Dosiervorrichtung mit den Merkmalen des Patentanspruchs 13 gelöst. Die jeweiligen abhängigen Patentansprüche stellen dabei vorteilhafte Weiterbildungen dar.

Die vorliegende Erfindung betrifft somit einen Pumpkopf für eine Dosiervorrichtung zur dosierten Abgabe eines Fluids gemäß dem Anspruch 1.

Die vorliegende Erfindung sieht somit vor, dass der Hohlkolben, der sich im zweiten Bauteil 60 befindet, beweglich führbar ist. In der Aussparung des zweiten Bauteils 60 wird somit vom Hohlkolben ein Volumen definiert, das bei Bewegung des Hohlkolbens (durch Applikation von Druck des abzugebenden Fluids) reduzierbar ist. Das sich innerhalb dieses Volumen befindliche Fluid wird dadurch durch die Durchtrittsöffnung des zweiten Bauteil 60 in Richtung der

Austrittsöffnung und somit nach außen abgegeben. In seiner endgültigen Position am Ende des Dosiervorgangs verschließt der Hohlkolben allerdings die Durchtrittsöffnung des zweiten Bauteils 60, so dass ein automatisches Ende des Dosiervorgangs stattfindet. Somit ermöglicht der Pumpkopf der vorliegenden Erfindung eine dosierte Abgabe des Fluids. Hierbei wird lediglich die in einer Lagerposition in der Aussparung des zweiten Bauteils 60 befindliche Flüssigkeitsvolumen abgegeben.

Die Austrittsöffnung kann dabei so ausgestaltet sein, dass mittels des Pumpkopfes das Fluid in Form von Tropfen oder in Form eines Sprühnebels abgeben werden kann.

Eine bevorzugte Ausführungsform sieht vor, dass die Aussparung und der Hohlkolben zylindrisch sind.

Die Erfindung sieht vor, dass der Durchtrittskanal in Richtung der Wandung in einer bezüglich einer axialen Projektion des Hohlkolbens konzentrisch oder exzentrisch angeordneten Mündung endet und der Durchtrittskanal bezüglich einer axialen Projektion des Hohlkolbens geradlinig und konzentrisch oder exzentrisch geführt ist und die Durchtrittsöffnung bezüglich der Mündung versetzt angeordnet ist.

Von Vorteil ist ferner, wenn das zweite Bauteil 60 mindestens ein Mittel zur Fixierung an einem Vorratsgefäß, insbesondere eine Einrastverbindung, Schnappverbindung oder ein Gewinde, umfasst.

Die Erfindung sieht vor, dass Kopfteil und Bauteil 60 mittelbar miteinander verbunden sind, wobei das Kopfteil eine innere Oberfläche aufweist, ein elastisches Ventil umfasst ist, das zumindest bereichsweise eine der inneren Oberfläche des Kopfteils entsprechende geometrische Ausgestaltung aufweist,
ein Bauteil 40 umfasst ist, das eine Durchtrittsöffnung für das abzugebende Fluid aufweist, über die ein Einströmen des Fluids zwischen Kopfteil und elastischem Ventil unter Deformation des elastischen Ventils unter Ausbildung eines Zwischenraums zwischen elastischem Ventil und Kopfteil ermöglicht (Betätigungszustand (B)),
wobei Kopfteil und Bauteil 40 form- und kraftschlüssig unter Einschluss der elastischen Dichtung zwischen Kopfteil und Bauteil 40 verbunden sind, und das elastische Ventil in einem Lagerzustand A des Pumpkopfes vollflächig sig auf der inneren Oberfläche des Kopfteils aufliegt, so dass eine fluidische Dichtung zwischen Kopfteil und Bauteil gewährleistet ist,
wobei das Bauteil 40 an seinem der elastischen Dichtung abgewandten Ende mit dem Bauteil 60 verbunden ist.

Gemäß der Erfindung sind somit das Kopfteil sowie das elastische Ventil aufeinander abgestimmt. Das elastische Ventil liegt dabei auf der inneren Oberfläche des Kopfteils auf, so dass ein vollständiger Verschluss der Austrittsöffnung gewährleistet ist. Aufgrund der Tatsache, dass das elastische Ventil zumindest bereichsweise elastisch ausgebildet ist, liegt das elastische Ventil vollflächig auf der inneren Oberfläche des Kopfteils auf, so dass im Lagerzustand keinerlei verbleibender Zwischenraum zwischen Kopfteil und elastischem Ventil verbleibt. Sämtliche zu dosierende Flüssigkeit wird somit am Ende des Dosiervorgangs, d.h. wenn der Pumpkopf von einem Betätigungszustand in einen Lagerzustand zurückkehrt, aus dem Pumpkopf über die Austrittsöffnung ausgegeben.

Die Erfindung sieht vor, dass das elastische Ventil einen Kopf und eine elastische Wandung umfasst, wobei der Kopf eine der inneren Oberfläche des Kopfteils entsprechende geometrische Ausgestaltung aufweist und die elastische Wandung verformbar ausgebildet ist.

Gemäß der Erfindung ist insbesondere die Wandung des elastischen Ventils elastisch ausgebildet, wohingegen der Kopf starr ausgebildet sein kann und somit direkt an die Beschaffenheit der inneren Oberfläche des Kopfteils angepasst ist. Somit ist ein sicheres Eingreifen des Kopfes des elastischen Ventils in die innere Oberfläche des Kopfteils im Bereich der Austrittsöffnung gewährleistet.

Weiter bevorzugt hierbei ist, dass die elastische Wandung mindestens eine Sollknickstelle aufweist, an der die elastische Wandung Überführen vom Lager- (A) in den Betätigungszustand (B) ab- bzw. einknickt.

Die Wandung des elastischen Ventils kann beispielsweise in Form eines Faltenbalgs ausgebildet sein. Im Betriebszustand knickt somit die Wandung des elastischen Ventils an den Sollknickstellen ein, während im Lagerzustand eine Streckung der Wandung erfolgt, so dass die Wandung ebenso auf der inneren Oberfläche des Kopfteils aufliegt.

Insbesondere vorteilhaft ist dabei, wenn die elastische Wandung aus einem Film eines elastisch verformbaren Materials, insbesondere aus einem thermoplastischen Kunststoff, Gummi und/oder Silicon, bevorzugt mit einer Dicke von 0,03 bis 1 mm, bevorzugt 0,08 bis 0,5 mm, besonders bevorzugt 0,20 bis 0,30 mm gebildet ist und/oder der Kopf massiv ausgebildet ist.

Der Kopf der elastischen Ventils kann vorzugsweise aus dem gleichen Material wie die elastische Wandung ausgebildet sein. Insbesondere sind Kopf und elastische Wandung einstückig ausgebildet und insbesondere simultan durch ein Spritzgussverfahren hergestellt.

In einer weiteren vorteilhaften Ausführungsform verfügt das elastische Ventil über mindestens ein Fixierelement, über das das elastische Ventil mit mindestens einem korrespondierendem Fixierelement des ersten Bauteils 40 kraftschlüssig verbunden ist, wobei bevorzugt das Fixierelement des elastischen Ventils und das Fixierelement des ersten Bauteils 40 als Einrastverbindung oder Schnappverbindung ausgebildet ist.

Weiter bevorzugt ist, wenn das erste Bauteil 40 eine Wandung aufweist, die den Zwischenraum abschließt, wobei über die Durchtrittsöffnung eine fluidische Kommunikation des Zwischenraums mit einem vom Zwischenraum aus gesehen jenseits der Wandung liegenden Bereich ermöglicht ist.

Gemäß dieser Ausführungsform können separate Bereiche innerhalb des Pumpkopfes ausgestaltet werden, über die ein sicheres Dosieren der Flüssigkeit möglich ist.

Gemäß einer weiteren bevorzugten Ausführungsform ist vorgesehen, dass die Durchtrittsöffnung vom Bereich unmittelbar durch die Wandung geführt ist und in den Bereich mündet, oder im Bereich durch eine seitliche Wandung des ersten Bauteils 40 durchgeführt wird, an einer äußeren Oberfläche des ersten Bauteils 40 in einer Einkerbung, die vom Bauteil begrenzt werden kann, geführt wird, und im Bereich erneut durch die seitliche Wandung des ersten Bauteils 40 geführt wird und in den Bereich mündet.

Insbesondere die letztgenannte Möglichkeit, wonach eine Einkerbung in der äußeren Oberfläche des Bauteils vorgesehen ist, ermöglicht eine bevorzugte Führung des Fluids in dem Zwischenraum zwischen dem Kopfteil und dem elastischen Ventil.

Besonders bevorzugt ist dabei, dass zwischen elastischem Ventil und erstem Bauteil 40 ein Element, das eine Rückstellkraft auf das elastische Ventil auswirkt, angeordnet ist, wobei die Rückstellkraft bewirkt, dass der im Betätigungszustand B ausgebildete Zwischenraum unter Rückkehr in den Lagerzustand A geschlossen wird. Das Element ist insbesondere eine Feder.

Weiter vorteilhaft ist dabei, dass das erste Bauteil 40 an seinem der elastischen Dichtung abgewandten Ende mit dem zweiten Bauteil 60 verbunden ist, über das der Pumpkopf (I) mit einem Vorratsgefäß (II) zur Bevorratung des abzugebenden Fluids verbindbar ist.

Hierbei ist es insbesondere von Vorteil, wenn zwischen dem ersten Bauteil 40 und dem zweiten Bauteil 60 mindestens ein Mittel zur sterilen Filtration eintretender Luft vorhanden ist (non-airless system), insbesondere ein Bakterienfilter, oder das erste Bauteil 40.

Der für Non-Airless-Systeme ausgebildete Pumpkopf kann dabei insbesondere bei Quetschflaschen oder entsprechenden Dosiervorrichtungen mit Pumpkopf angewandt werden.

Bei Quetschflaschen findet dabei eine passive Betätigung des Pumpkopfes statt, da der fluidische Druck durch Betätigung der mit dem Pumpkopf verbundenen Quetschflasche erfolgt.

Hierbei kann das erste Bauteil 40 gegenüber dem zweiten Bauteil 60 fixiert sein. Diese Ausführungsform ist insbesondere für Dosiervorrichtungen, die eine Quetschflasche umfassen, vorteilhaft.

Eine weitere bevorzugte Ausführungsform sieht vor, dass bei Verbindung des Pumpkopfes über das Bauteil 60 mit dem Vorratsgefäß eine Dichtung zwischen Bauteil 60 und dem Vorratsgefäß angeordnet ist.

Bevorzugt kann das Kopfteil ein antibakterielles Material, bevorzugt Metalle oder Metallionen, insbesondere Silberpartikel oder Silberionen beinhalten. Insbesondere ist das Kopfteil im Spritzgussverfahren herstellbar, hierbei kann beispielsweise ein antibakterielles Material direkt mit dem thermoplastischen Material, das zum Herstellen des Spritzgussteils verwendet wird, compoundiert werden.

Die Erfindung betrifft zudem eine Dosiervorrichtung, die einen wie voranstehend beschriebenen Pumpkopf umfasst. Der Pumpkopf ist dabei mit einem Vorratsgefäß verbunden.

Bevorzugt kann das Vorratsgefäß als Quetschflasche ausgebildet sein.

Der Pumpkopf eignet sich insbesondere für Non-Airless-Systeme, insbesondere für Dosiervorrichtungen, die über eine Quetschflasche verfügen. Bevorzugt können in derartigen Dosiervorrichtungen Konservierungsmittel enthaltende, insbesondere jedoch konservierungsmittelfreie Lösungen bevorratet werden.

Die vorliegende Erfindung wird anhand der beigefügten Figuren näher beschrieben, ohne die Erfindung auf die speziell dargestellten Ausführungsformen zu beschränken.

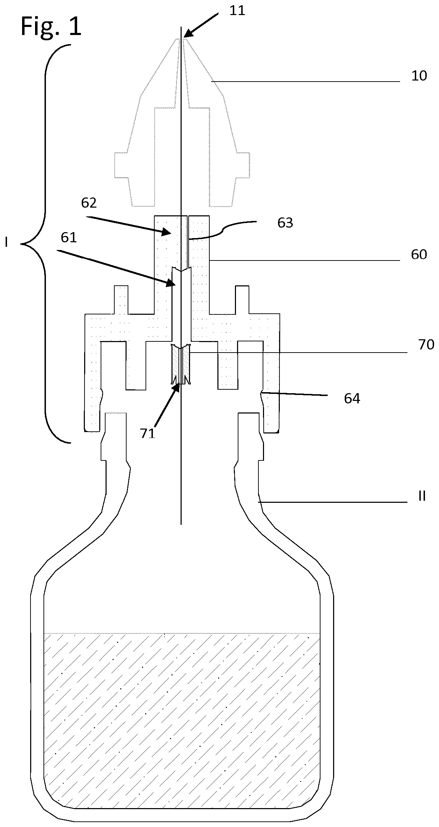

Figur 1 zeigt eine Explosionszeichnung einer Dosiervorrichtung, die als dosierbar betätigbare Quetschflasche ausgebildet ist. Die Dosiervorrichtung verfügt über einen Pumpkopf I sowie eine Quetschflasche II (Vorratsgefäß), in der schraffiert dargestellt ein abzugebendes Fluid beinhaltet ist.

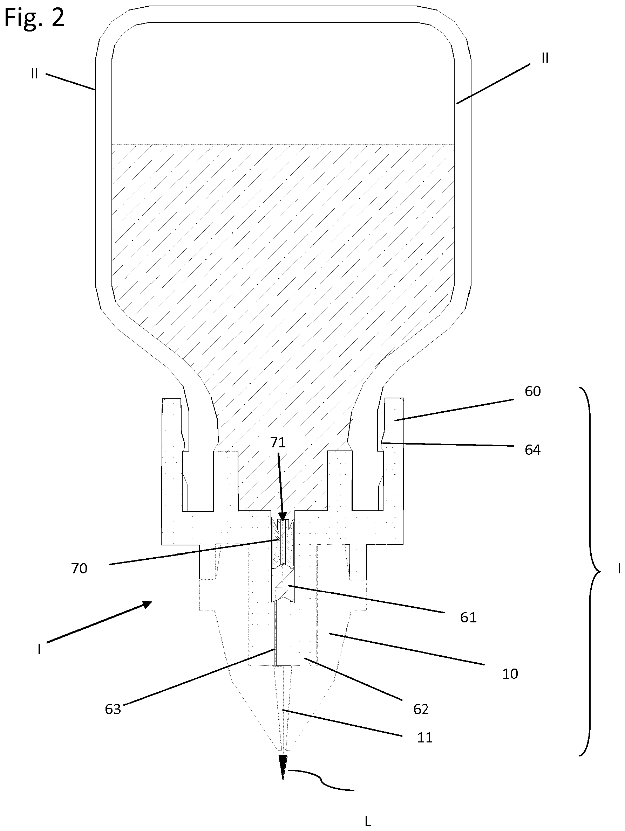

Der Pumpkopf I ist dabei aus einem Kopfteil 10, das auf einem zweiten Bauteil 60 aufsteckbar ist, gebildet. Über die im Kopfteil 10 untergebrachte Austrittsöffnung 11 kann das Fluid beispielsweise in Tropfenform aus der Dosiervorrichtung austreten. Das Bauteil 60 verfügt dabei über eine Aussparung 61, in die ein beweglich führbarer Hohlkolben 70 eingepasst ist. Das Bauteil 60 wird gegenüber dem Kopfteil 10 durch eine Wandung 62 begrenzt. Der Kolben 70 verfügt über einen Durchtrittskanal 71, der im in Figur 1 dargestellten beispielhaften Fall zentral im Kolben 70 angeordnet ist. Die fluidische Kommunikation zwischen dem Inneren der Quetschflasche II und der Austrittsöffnung 11 im Pumpkopf I erfolgt über den Durchtrittskanal 71 des Hohlkolbens, einer Durchtrittsöffnung 63 in der Wandung 62 des zweiten Bauteils 60 sowie der Austrittsöffnung 11 selbst. Wie aus Figur 1 erkennbar ist, ist die Durchtrittsöffnung 63 dabei exzentrisch zur in Figur 1 längs dargestellten Achse angeordnet. Für den Fall, dass der bewegliche Hohlkolben 70 bis an die Wandung 62 geführt wird, wird die Durchtrittsöffnung 63 vom Hohlkolben 70 verschlossen. Es kann somit keine weitere Flüssigkeit, auch bei längerer Applikation von Druck auf die Quetschflasche, durch den Pumpkopf I abgegeben werden. Der Pumpkopf verschließt sich somit beim Dosiervorgang selbst. Die Funktionsweise des Pumpkopfs, wie in Figur I dargestellt, wird in den nachfolgenden Figuren 2 bis 4 näher erläutert.

Figur 2 zeigt die Dosiervorrichtung gemäß Figur 1 in zusammengebautem Zustand. In Figur 2 sind die gleichen Bezugszeichen wie in Figur 1 verwendet. Zur Abgabe von Flüssigkeit wird die Dosiervorrichtung auf den Kopf gestellt, so dass die zwischen Hohlkolben 70 im Lagerzustand und der Wandung 62 des zweiten Portals 60 befindliche Aussparung 61 über den Kanal 71 mit Fluid befüllt werden kann.

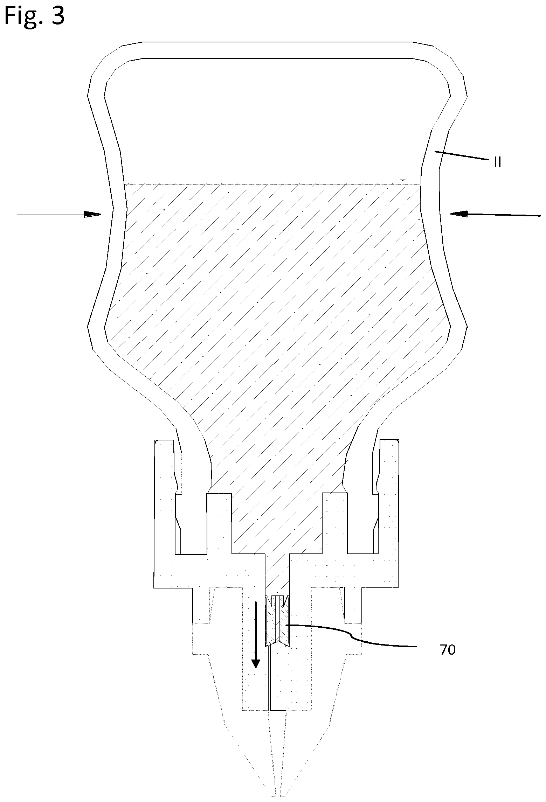

Wird nun, wie in Figur 3 dargestellt, ein Druck auf die Quetschflasche II ausgeübt (in Figur 3 für die Quetschflasche II durch die horizontalen Pfeile angedeutet) bewirkt der Druck, dass der Hohlkolben 70 sich, wie in Figur 3 durch den Pfeil dargestellt, nach unten bewegt. Somit wird die in Figur 2 in der durch Hohlkolben 70 und Wandung 62 begrenzte Aussparung 61 befindliche Flüssigkeit durch die Durchtrittsöffnung 63 des Portals 60 in bzw. aus der Austrittsöffnung 11 nach außen gepresst. Am Ende des Dosiervorgangs, d. h. wenn der Hohlkolben 70 bis an der Wandung 62 des zweiten Portals 60 anstößt, wird die Durchtrittsöffnung 63 des zweiten Bauteils 60 vom Hohlkolben 70 verschlossen, so dass keine weitere Abgabe des Fluids mehr möglich ist. Dieser Zustand (Betätigungszustand) ist in Figur 3 dargestellt.

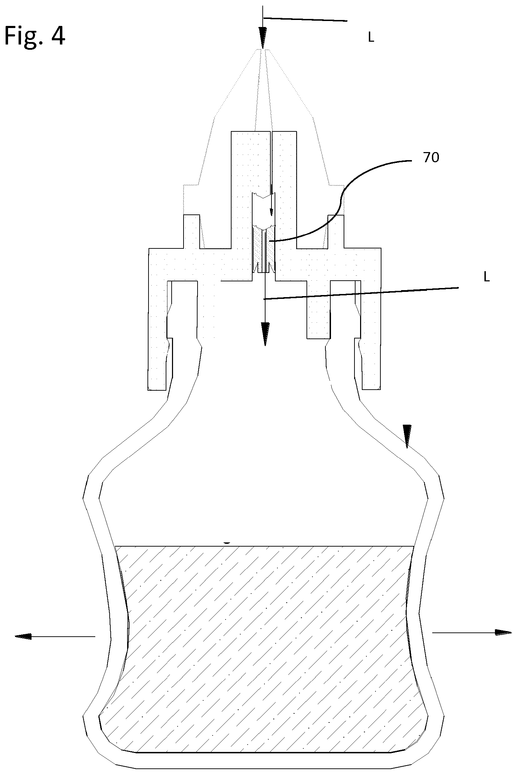

Figur 4 zeigt die Situation, die eintritt, wenn die Dosiervorrichtung losgelassen wird und somit vom Betätigungszustand (wie in Figur 3 dargestellt) in den Lagerzustand überführt wird. Aufgrund der Rückstellungskraft (horizontale Pfeile auf Höhe der Quetschflasche II in Figur 4) findet ein Druckausgleich statt, so dass Luft L in die Flasche eintritt. Hierbei wird der Hohlkolben 70 in seine Ausgangsposition rückgeführt, d. h. der Hohlkolben 70 bewegt sich nach unten.

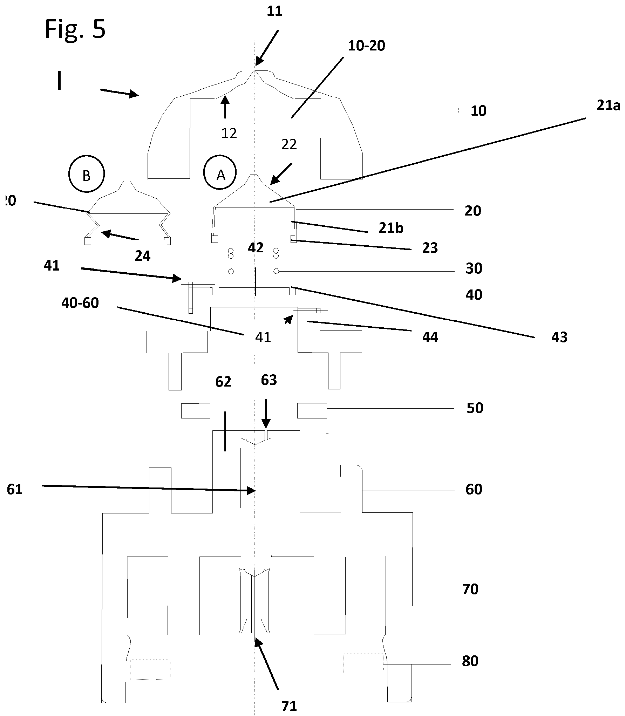

Figur 5 zeigt einen weiteren Pumpkopf I, der ebenso als Dosierkopf für eine Quetschflasche geeignet ist. Der Pumpkopf I umfasst dabei ein Kopfteil 10 mit einer Auslassöffnung 11, die bevorzugt zur tropfenförmigen Abgabe von Fluiden ausgebildet sein kann. Ebenso ist es jedoch möglich, die Auslassöffnung so auszugestalten, dass ein Sprühnebel bei der Abgabe des Fluids erzeugbar ist. Das Kopfteil 10 sitzt dabei direkt auf einem Bauteil 40 auf und ist mit diesem form- und kraftschlüssig verbunden. Das Kopfteil 10 weist dabei eine innere Aussparung auf, die eine innere Oberfläche 12 aufweist. Zwischen Kopfteil 10 und Bauteil 40 ist ein elastisches Ventil 20 angeordnet, das einen Kopf 21a und eine elastische Wandung 21b aufweist. Das Ventil 20 ist in einem Lagerzustand (A) und einem Betätigungszustand (B) dargestellt. Erkennbar ist, dass im Betätigungszustand (B) die elastische Wandung 21b einknickt, hierzu enthält die elastische Wandung 21b bevorzugt eine Sollknickstelle 24, die im Betätigungszustand (B) ersichtlich sind. Im Lagerzustand (A) sind die Sollknickstellen 24 glatt gezogen. Der Kopf 21a des Ventils 20 kann dabei massiv ausgebildet sein, die elastische Wandung 21b als schlauchförmige Wandung an den Kopf 21a angefügt sein. Das komplett elastische Ventil 20 kann einstückig im Spritzgussverfahren hergestellt werden. An der elastischen Wandung 21b sind Fixierelemente 23, beispielsweise eine umlaufende Feder vorhanden. Über die Fixierelemente 23 ist das elastische Ventil 20 am Körper 40 fixiert. Hierzu werden die Fixierelemente 23 in korrespondierende Fixierelemente 43, beispielsweise eine umlaufende Nut, des Körpers 40 eingerastet. Die Verbindung der Fixierelemente 23 und 43 ist dabei gegenüber zu dosierenden Fluiden abdichtend ausgestaltet. Die Oberfläche 22 des Kopfes 21a des Ventils 20 weist dabei eine identische Ausgestaltung auf, wie die innere Oberfläche 12 des Kopfteils 10, so dass der Kopf 21a des Ventils 20 im Lagerzustand A formschlüssig in das Kopfteil 10 eingreifen kann und somit die Auslassöffnung 11 vollständig verschließt. Hierdurch wird der im Betätigungszustand B ausgebildete Zwischenraum 10-20 zwischen Kopfteil 10 und elastischem Ventil 20 komplett verschlossen, sämtliches Fluid, das im Betätigungszustand zwischen Kopfteil 10 und elastischem Ventil 20 im Zwischenraum 10-20 vorhanden ist, wird bei Überführen des Pumpkopfes in den Lagerzustand aus der Auslassöffnung 11 ausgetragen. Das Bauteil 40 weist eine Wandung 42 auf, die baulich den Pumpkopf in einen oberen Teil (der Teil, der das Kopfteil und das elastische Ventil 20 umfasst) und einen unteren Teil (unterhalb der Wandung 42) trennt. Unterhalb der Wandung 42 des Bauteils 40 ist ein Bauteil 60 eingefügt, das formschlüssig mit dem Bauteil 40 verbindbar ist. Zwischen Bauteil 60 und Bauteil 40 resultiert ein Zwischenraum 40-60. Das Bauteil 40 weist dabei eine Durchlassöffnung 41 auf, die im beispielhaften, in Figur 5 dargestellten Fall derart ausgebildet ist, dass im unteren Teil des Bauteils 40 (auf Höhe des Zwischenraumes 40-60) die Durchlassöffnung 41 durch die Wandung 44 des Bauteils 40 durchgeführt ist und dort in einer (nicht dargestellten) Kerbe auf der äußeren Oberfläche des Bauteils 40 herum um das Bauteil 40 geführt ist. Die Kerbe kommuniziert dabei mit einem in Figur 5 links dargestellten, nach oben führenden Kanal, der in einer weiteren Durchlassöffnung 41 mündet, durch die das Fluid in den Zwischenraum 10-20 zwischen Ventil 20 und Kopfteil 10 führbar ist. Der auf der Oberfläche des Bauteils 40 geführte Kanal wird dabei vom aufgesteckten Bauteil 40 begrenzt und abgeschlossen.

Das Bauteil 60 verfügt über eine kopfseitig angebrachte Wandung 62, in die eine exzentrische Durchgangsöffnung 63 eingefügt ist. Das Bauteil 60 wird dabei soweit ins Bauteil 40 eingesteckt, dass die Wandung 62 nicht direkt mit der Wandung 42 des Bauteils 40 abschließt, sondern ein zwischenbleibender Bereich 40-60 erhalten bleibt und somit die Durchgangsöffnung 41, die im unteren Teil des Bauteils 40 angeordnet ist, geöffnet bleibt. Im beispielhaften Fall des Pumpkopfes I nach Figur 5 ist zwischen Bauteil 40 und Bauteil 60 ein bakterienfilterndes Material 50, über das ein Luftaustausch des innenliegenden Bereichs des Pumpkopfes mit der Umgebung möglich ist, angebracht. Das Bauteil 60 verfügt über eine Aussparung 61, in die ein Hohlkolben 70 mit einem inneren Hohlvolumen 71 eingebracht ist. Der Hohlkolben 70 ist dabei in axialer Richtung (in Figur 5 nach oben und unten) beweglich in der Aussparung 61 angeordnet. Zudem kann der Pumpkopf über ein Dichtungselement 80 verfügen, über das ein abdichtendes Anbringen des Pumpkopfes I auf einem in Figur 5 nicht dargestellten Vorratsgefäß II möglich ist.

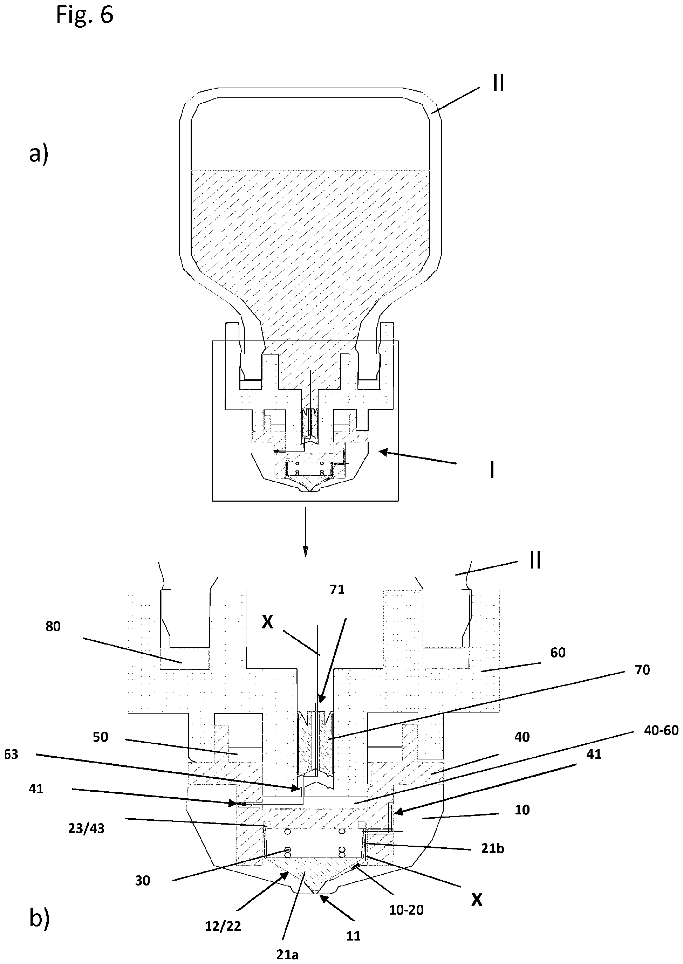

Figur 6 zeigt einen Pumpkopf I nach Figur 5, der auf einem Vorratsgefäß II, im Falle der Figur 6 einer Quetschflasche, dargestellt ist. Das Vorratsgefäß II beinhaltet dabei ein abzugebendes Fluid, das in Figur 2a im Vorratsgefäß II schraffiert dargestellt ist. Figur 6a zeigt einen Schnitt durch die Gesamtanordnung im Gebrauchszustand, Figur 6b das in Figur 2a umrandete Detail des Pumpkopfes I. Hierbei wurden die gleichen Bezugszeichen wie in Figur 1 dargestellt verwendet. In Figur 6b ist mit dem Pfeil X, der durch den Durchtrittskanal 71 des Hohlkolbens 70, durch den Zwischenbereich 40-60 zwischen Bauteil 60 und Bauteil 40, durch die Durchtrittsöffnung 41, durch den Zwischenraum 10-20, der sich bei Betätigung der Dosiervorrichtung gemäß Figur 6 ergibt, und schließlich in Richtung der Auslassöffnung 11 der Weg des Fluids aus dem Vorratsbehältnis II Richtung Auslassöffnung 11 angedeutet.

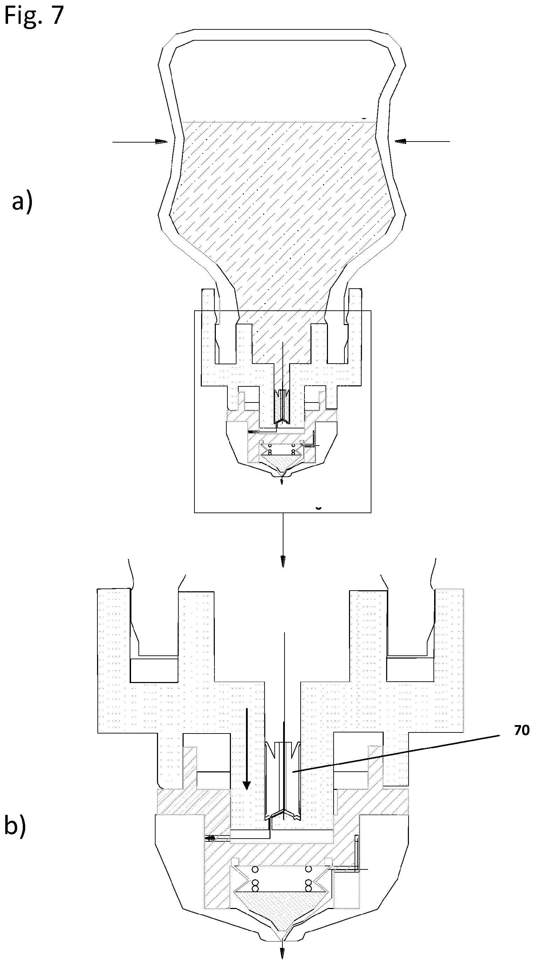

Figur 7 zeigt die gleiche Dosiervorrichtung gemäß Figur 6 bei Applikation eines Drucks (durch die Pfeile in Figur 37 angedeutet) auf die Quetschflasche II. Hierbei wird der Hohlkolben 70 (siehe Figur 7b) nach unten gedrückt (durch den Pfeil links neben Hohlkolben 70 angedeutet) und somit das sich unterhalb des Hohlkolbens 70 befindliche, vom Hohlkolben 70 und Bauteil 60 eingeschlossene Fluid durch die Durchgangsöffnung 43 des Bauteils 60 in den Zwischenraum 40-60 eingepresst. In Figur 7 sind mit Ausnahme des Bezugszeichens 70 aus Gründen der Übersichtlichkeit keine weiteren Bezugszeichen eingefügt. Das Fluid 41 wird über die Durchgangsöffnung 41 weiter in den Zwischenraum 10-20 zwischen elastischem Ventil 20 und Kopfteil 10 des Pumpkopfes I eingepresst. Hierbei findet eine Deformation des elastischen Ventils statt, das wie in Figur 7b gezeigt, abknickt und somit die Auslassöffnung 11 freigibt, wodurch das Fluid austreten kann. Aufgrund der Tatsache, dass durch den Durchtrittskanal 71 des Hohlkolbens 70 und die Durchtrittsöffnung 63 des Bauteils 60 nicht deckungsgleich angeordnet sind, findet bei Anstoßen des Hohlkolbens 70 an der Wandung 62 des Bauteils 60 ein Verschluss der Durchtrittsöffnung 63 statt. Somit ist auch bei weiterer Applikation von Druck kein weiteres Austreten eines Fluids aus der Dosiervorrichtung möglich, da der Durchtrittskanal 63 verschlossen ist. Mit diesem Pumpkopf I ist somit eine dosierte Abgabe von Flüssigkeit aus einer Quetschflasche möglich. Der in Figur 7b dargestellte Zustand entspricht dem Betätigungszustand (B) des Pumpkopfes.

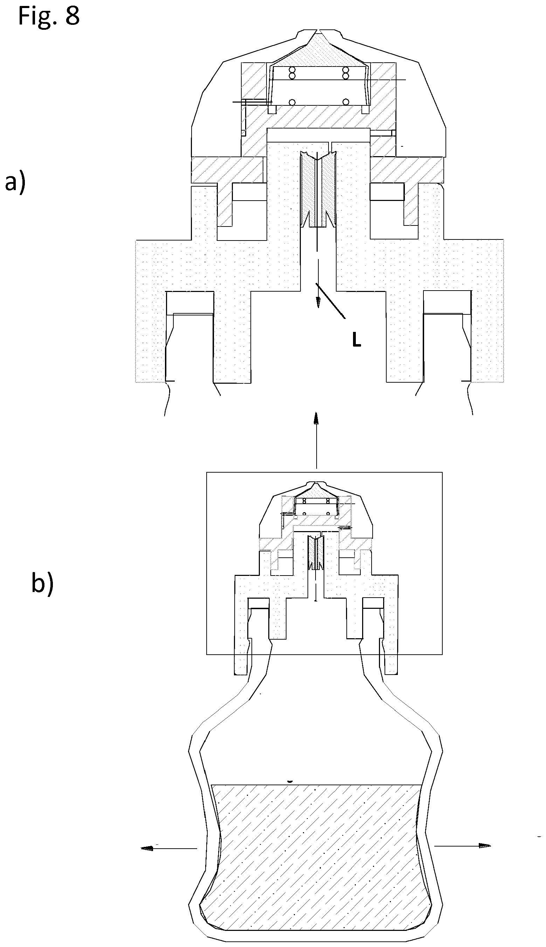

Figur 8 zeigt eine Ausführungsform, bei der eine Überführung der Dosiervorrichtung, insbesondere des Pumpkopfes, vom Betätigung- in den Lagerzustand erfolgt. Aus Gründen der Übersichtlichkeit sind keine Bezugszeichen dargestellt, es gelten jedoch die gleichen Ausführungen wie bei den vorstehenden Figuren. Figur 8a stellt dabei ein vergrößertes Detail der in Figur 8b dargestellten Dosiervorrichtung dar. Wie aus Figur 8a ersichtlich ist, ist der Hohlkolben 70 nach wie vor in der Endposition, die beim Betätigungsvorgang wie in Figur 7 dargestellt erreicht wird. Nach Beendigung des Betätigungsvorgangs kann die Dosiervorrichtung vom Benutzer in die Lagerposition überführt werden, wobei die Dosiervorrichtung, im Falle der Figur eine Quetschflasche, auf den Kopf gestellt wird. Hierbei lässt der Benutzer die Quetschflasche los, aufgrund der Rückstellkraft der Quetschflasche nimmt diese wieder ihre ursprüngliche Form, wie in Figur 6 dargestellt, ein. Die Rückstellkraft ist in Figur 8b durch die nach außen weisenden Pfeile dargestellt. Aufgrund des entnommenen Volumens an Flüssigkeit entsteht bei diesem Vorgang im Vorratsgefäß II ein Unterdruck, der sich über den Hohlkolben 70 in den Pumpkopf I der Dosiervorrichtung fortsetzt. Zum Druckausgleich wird über ein steriles Filter Luft in das Vorratsgefäß 2 eingesaugt. Bei diesem Vorgang wird auch der Hohlkolben 70 in seine Ausgangsposition zurückbewegt, d.h. im in Figur 8 dargestellten Fall wird der Hohlkolben 70 nach unten bewegt. Über das Bakterienfilter 50, das beispielsweise zwischen Bauteil 60 und Bauteil 40 vorhanden sein kann, ist ein Lufteintritt (Pfeil L) ins Innere des Vorratsgefäßes II, d.h. der Quetschflasche möglich.

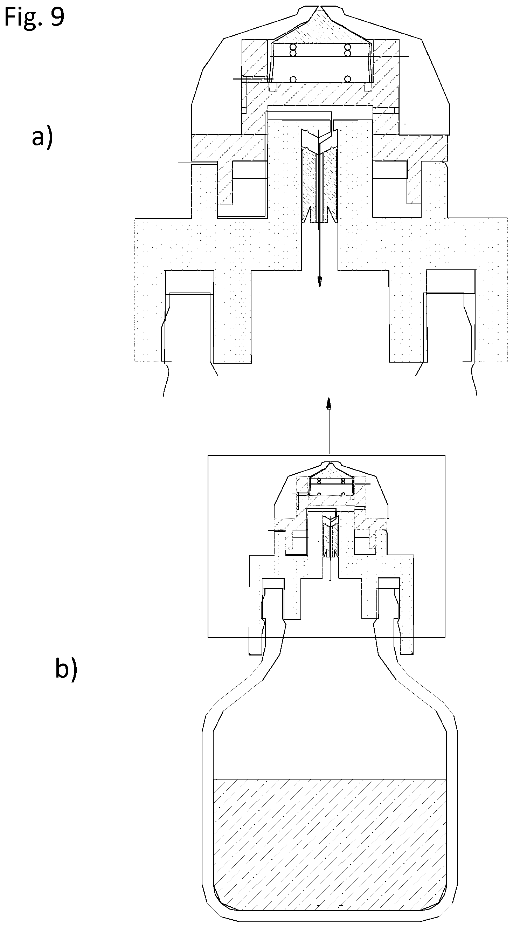

Figur 9 zeigt die Lagerposition A der Flasche, in der der Hohlkolben 70 in seiner Endposition dargestellt ist und die Quetschflasche II vollständig relaxiert ist (siehe Figur 9b).

## Patentansprüche

1. Pumpkopf (I) ausgeführt zum Einsatz in einer Dosiervorrichtung zur dosierten Abgabe eines Fluids, umfassend
ein Kopfteil (10) mit einer Austrittsöffnung (11) für das abzugebende Fluid,
ein Bauteil (60), das eine Aussparung (61), eine die Aussparung (61) einseitig begrenzende Wandung (62) sowie eine in der Wandung (62) eingebrachte, die Aussparung (61) unmittelbar oder mittelbar mit der Austrittsöffnung (11) des Kopfteils (10) in fluidische Kommunikation bringende Durchtrittsöffnung (63) aufweist, wobei das Bauteil (60) in Richtung der Wandung (62) mittelbar mit dem Kopfteil (10) verbunden ist, wobei das Kopfteil (10) eine innere Oberfläche (12) aufweist,
einen Hohlkolben (70) mit einem Durchtrittskanal (71), der in die Aussparung (61) eingepasst und in der Aussparung (61) beweglich bis zur Wandung (62) führbar ist,
**dadurch gekennzeichnet, dass**
der Durchtrittskanal (71) in Richtung der Wandung (62) in einer bezüglich einer axialen Projektion des Hohlkolbens (70) konzentrisch oder exzentrisch angeordneten Mündung endet und der Durchtrittskanal (71) bezüglich einer axialen Projektion des Hohlkolbens (70) geradlinig und konzentrisch oder exzentrisch geführt ist und die Durchtrittsöffnung (63) bezüglich der Mündung versetzt angeordnet ist, so dass die Durchtrittsöffnung (63) bei Bewegung des Hohlkolbens in Richtung der Wandung (62) vom Hohlkolben (70) verschließbar ist,
ein elastisches Ventil (20) umfasst ist, das zumindest bereichsweise eine der inneren Oberfläche (12) des Kopfteils (10) entsprechende geometrische Ausgestaltung (22) aufweist,
ein Bauteil (40) umfasst ist, das eine Durchtrittsöffnung (41) für das abzugebende Fluid aufweist, über die in einem Betätigungszustand (B) ein Einströmen des Fluids zwischen Kopfteil (10) und elastischem Ventil (20) unter Deformation des elastischen Ventils (20) unter Ausbildung eines Zwischenraums (10-20) zwischen elastischem Ventil und Kopfteil ermöglicht ,
wobei Kopfteil (10) und Bauteil (40) form- und kraftschlüssig unter Einschluss des elastischen Ventils (20) zwischen Kopfteil (10) und Bauteil (40) verbunden sind, und das elastische Ventil (20) in einem Lagerzustand (A) des Pumpkopfes vollflächig formschlüssig auf der inneren Oberfläche (12) des Kopfteils (10) aufliegt, so dass eine fluidische Dichtung zwischen Kopfteil (10) und Bauteil (40) gewährleistet ist,
wobei das Bauteil an dem elastischen Ventil (20) abgewandten Ende mit dem Bauteil (60) verbunden ist, und
das elastische Ventil einen Kopf (21a) und eine elastische Wandung (21b) umfasst, wobei der Kopf eine der inneren Oberfläche (12) des Kopfteils (10) entsprechende geometrische Ausgestaltung (22) aufweist und die elastische Wandung (21b) verformbar ausgebildet ist.

2. Pumpkopf (I) nach Anspruch 1, **dadurch gekennzeichnet, dass** die Aussparung (61) und der Hohlkolben (70) zylindrisch sind.

3. Pumpkopf (I) nach einem der vorhergehenden Ansprüche, **dadurch gekennzeichnet, dass**
das Bauteil (60) mindestens ein Mittel (64) zur Fixierung an einem Vorratsgefäß (II), insbesondere eine Einrastverbindung, Schnappverbindung oder ein Gewinde, umfasst.

4. Pumpkopf (I) nach vorhergehendem Anspruch, **dadurch gekennzeichnet, dass** die elastische Wandung (21b)
mindestens eine Sollknickstelle (24) aufweist, an der die elastische Wandung (21b) Überführen vom Lager- (A) in den Betätigungszustand (B) ab- bzw. einknickt, und/oder
aus einem Film eines elastisch verformbaren Materials, insbesondere aus einem thermoplastischen Kunststoff, Gummi und/oder Silicon, bevorzugt mit einer Dicke von 0,03 bis 1 mm, bevorzugt 0,08 bis 0,5 mm, besonders bevorzugt 0,20 bis 0,30 mm gebildet ist und/oder der Kopf (21a) massiv ausgebildet ist.

5. Pumpkopf (I) nach einem der vorhergehenden Ansprüche, **dadurch gekennzeichnet, dass** Kopf (21a) und elastische Wandung (21b) einstückig ausgebildet sind.

6. Pumpkopf (I) nach einem der vorhergehenden Ansprüche, **dadurch gekennzeichnet, dass** das elastische Ventil (20) über mindestens ein Fixierelement (23) verfügt, über das das elastische Ventil (20) mit mindestens einem korrespondierendem Fixierelement (43) des Bauteils (40) kraftschlüssig verbunden ist, wobei bevorzugt das Fixierelement (23) des elastischen Ventils (20) und das Fixierelement (43) des Bauteils (40) als Einrastverbindung oder Schnappverbindung ausgebildet ist.

7. Pumpkopf (I) nach einem der vorhergehenden Ansprüche, **dadurch gekennzeichnet, dass** das Bauteil (40) eine Wandung (42) aufweist, die den Zwischenraum (10-20) abschließt, wobei über die Durchtrittsöffnung eine fluidische Kommunikation des Zwischenraums (10-20) mit einem vom Zwischenraum (10-20) aus gesehen jenseits der Wandung (42) liegenden Bereich (40-60) ermöglicht ist, wobei insbesondere die Durchtrittsöffnung (41) vom Bereich (40-60) unmittelbar durch die Wandung (42) geführt ist und in den Bereich (10-20) mündet, oder
im Bereich (40-60) durch eine seitliche Wandung (44) des Bauteils (40) durchgeführt wird, an einer äußeren Oberfläche des Bauteils (40) in einer Einkerbung, die vom Bauteil (10) begrenzt werden kann, geführt wird, und im Bereich (10-20) erneut durch die seitliche Wandung des Bauteils (40) geführt wird und in den Bereich (10-20) mündet.

8. Pumpkopf (I) nach einem der vorhergehenden Ansprüche, **dadurch gekennzeichnet, dass** zwischen elastischem Ventil (20) und Bauteil (40) ein Element (30), das eine Rückstellkraft auf das elastische Ventil (20) auswirkt, angeordnet ist, wobei die Rückstellkraft bewirkt, dass der im Betätigungszustand (B) ausgebildete Zwischenraum (10-20) unter Rückkehr in den Lagerzustand (A) geschlossen wird, wobei das Element (30) insbesondere eine Feder ist.

9. Pumpkopf (I) nach einem der vorhergehenden Ansprüche, **dadurch gekennzeichnet, dass** zwischen dem Bauteil (60) und einem am Bauteil (60) fixierbaren Vorratsgefäß (II) und/oder zwischen dem Bauteil (40) und dem Bauteil (60) mindestens ein Mittel (50) zur sterilen Filtration eintretender Luft vorhanden ist, insbesondere ein Bakterienfilter.

10. Pumpkopf (I) nach einem der vorhergehenden Ansprüche, **dadurch gekennzeichnet, dass** das Bauteil (40) gegenüber dem Bauteil (60) fixiert ist.

11. Pumpkopf (I) nach einem der vorhergehenden Ansprüche, **dadurch gekennzeichnet, dass** bei Verbindung des Pumpkopfes (I) über das Bauteil (60) mit dem Vorratsgefäß (II) eine Dichtung (80) zwischen Bauteil (60) und dem Vorratsgefäß (II) angeordnet ist.

12. Pumpkopf (I) nach einem der vorhergehenden Ansprüche, **dadurch gekennzeichnet, dass** das Kopfteil (10) ein antibakterielles Material, bevorzugt Metalle oder Metallionen, insbesondere Silberpartikel oder Silberionen beinhaltet.

13. Dosiervorrichtung, umfassend einen mit einem Vorratsgefäß (II) verbundenen Pumpkopf (I) nach einem der vorhergehenden Ansprüche, wobei das Vorratsgefäß (II) bevorzugt als Quetschflasche ausgebildet ist.

## Claims

1. A pump head (I) for a metering apparatus for a metered dispensing of a fluid comprising
a head part (10) having an outlet opening (11) for the fluid to be dispensed;
a part (60) that has a cut-out (61), a wall (62) bounding the cut-out (61) at one side, and a passage opening (63) introduced into the wall (62) that brings the cut-out (61) directly or indirectly into fluidic communication with the outlet opening (11) of the head part (10), with the part (60) being indirectly connected to the head part (10) in the direction of the wall (62), with the head part (10) having an inner surface (12),
a hollow piston (70) having a passage channel (71) that is fit into place in the cutout (61) and is movably guidable up to the wall (62) in the cut-out (61),
**characterized in that**
the passage channel (71) ends in the direction of the wall (62) in an aperture arranged concentrically or eccentrically with respect to an axial projection of the hollow piston (70) and the passage channel (71) is guided in a straight line and concentrically or eccentrically with respect to an axial projection of the hollow piston (70) and the passage opening (63) is arranged offset with respect to the aperture such that the passage opening (63) is closable by the hollow piston (70) on a movement of the hollow piston in the direction of the wall (62),
an elastic valve (20) being comprised that at least regionally has a geometrical configuration (22) corresponding to the inner surface (12) of the head part (10);
and a part (40) being comprised that has a passage opening (41) for the fluid to be dispensed via which in an actuation state (B) an inflow of the fluid between the head part (10) and the elastic valve (20) is made possible while deforming the elastic valve (20) while forming an intermediate space (10-20) between the elastic valve and the head part,
with the head part (10) and the part (40) being connected with shape matching and a force fit while enclosing the elastic seal (20) between the head part (20) and the part (40) and the elastic valve (20) lying over the full area with a shape match on the inner surface (12) of the head part (10) in a storage position (A) of the pump head so that a fluidic seal between the head part (10) and the part (40) is ensured,
with the part (40) being connected at its end remote from the elastic seal to the part (60), and
the elastic valve comprises a head (21a) and an elastic wall (21b), with the head having a geometrical configuration (22) corresponding to the inner surface (12) of the head part (10) and with the elastic wall (21b) being deformable.

2. A pump head (I) in accordance with claim 1, **characterized in that** the cut-out (61) and the hollow piston (70) are cylindrical.

3. A pump head (I) in accordance with one of the preceding claims, **characterized in that** the part (60) comprises at least one means (64) for fixing to a storage vessel (II), in particular a latch connection, a snap-in connection, or a thread.

4. A pump head (I) in accordance with the preceding claim, **characterized in that** the elastic wall (21b)
has at least one desired kink point (24) at which the elastic wall (22b) kinks down or in on a transition from the storage state (A) into the actuation state (B), and/or
is formed from a film of an elastically deformable material, in particular from a thermoplastic, rubber and/or silicone, preferably having a thickness of 0.03 to 1 mm, preferably 0.08 to 0.5 mm, particularly preferably 0.20 to 0.30 mm; and/or **in that** the head (21a) is massive.

5. A pump head (I) in accordance with one of the preceding claims, **characterized in that** the head (21a) and the elastic wall (21b) are formed in one piece.

6. A pump head (I) in accordance with one of the preceding claims, **characterized in that** the elastic valve (20) has at least one fixing member (23) via which the elastic valve (20) is connected in a force-locking manner to at least one corresponding fixing member (43) of the part (40), with the fixing member (23) of the elastic valve (20) and the fixing member (43) of the part (40) preferably being formed as a latch connection or as a snap connection.

7. A pump head (I) in accordance with one of the preceding claims, **characterized in that** the part (40) has a wall (42) that terminates the intermediate space (10-20), with a fluidic communication of the intermediate space (10-20) with a region (40-60) disposed at the other side of the wall (42), viewed from the intermediate space (10-20) being made possible via the passage opening (41), wherein especially the passage opening (41) is led from the region (40-60) directly through the wall (42) and opens into the region (10-20), or is led through a lateral wall (44) of the part (40) in the region (40-60), is guided in a notch at an outer surface of the part (40) that can be bounded by the part (10) and is again led through the lateral wall of the part (40) in the region (10-20) and opens into the region (10-20).

8. A pump head (I) in accordance with one of the preceding claims, **characterized in that** a member (30) that effects a return force on the elastic valve (20) is arranged between the elastic valve (20) and the part (40), with the return force having the effect that the intermediate space (10-20) formed in the actuation state (B) is closed while returning to the storage state (A), with the part (30) in particular being a spring.

9. A pump head (I) in accordance with one of the preceding claims, **characterized in that** at least one means (50) for a sterile filtration of inflowing air is present, in particular a bacterial filter, between the part (60) and a storage vessel (II) fixable to the part (60) and/or between the part (40) and the part (60).

10. A pump head (I) in accordance with one of the preceding claims, **characterized in that** the part (40) is fixed with respect to the part (60).

11. A pump head (I) in accordance with one of the preceding claims, **characterized in that** on a connection of the pump head (I) via the part (60) to the storage vessel (II), a seal (80) is arranged between the part (60) and the storage vessel (II).

12. A pump head (I) in accordance with one of the preceding claims, **characterized in that** the head part (10) comprises an antibacterial material, preferably metals or metal ions, in particular silver particles or silver ions.

13. A metering device comprising a pump head (I) in accordance with one of the preceding claims connected to a storage vessel (II), wherein preferably the storage vessel (II) is configured as a squeeze bottle.

## Revendications

1. Tête de pompage (I) conçue pour être utilisée dans un dispositif de dosage pour la distribution dosée d'un fluide, comprenant
une partie tête (10) avec une ouverture de sortie (11) pour le fluide à distribuer,
une pièce (60), qui présente un évidement (61), une paroi (62) délimitant l'évidement (61) d'un côté ainsi qu'une ouverture de passage (63) ménagée dans la paroi (62), amenant l'évidement (61) directement ou indirectement en communication fluidique avec l'ouverture de sortie (11) de la partie tête (10), dans laquelle la pièce (60) en direction de la paroi (62) est reliée indirectement à la partie tête (10), dans laquelle la partie tête (10) présente une surface intérieure (12),
un piston creux (70) avec un canal de passage (71), qui est inséré dans l'évidement (61) et peut être guidé dans l'évidement (61) de manière mobile jusqu'à la paroi (62),
**caractérisée en ce que**
le canal de passage (71) débouche en direction de la paroi (62) dans une embouchure disposée de manière concentrique ou excentrique par rapport à une projection axiale du piston creux (70) et le canal de passage (71) est guidé de manière rectiligne et concentrique ou excentrique par rapport à une projection axiale du piston creux (70) et l'ouverture de passage (63) est disposée de manière décalée par rapport à l'embouchure, de sorte que l'ouverture de passage (63) peut être fermée par le piston creux (70) lors du déplacement du piston creux en direction de la paroi (62),
une soupape élastique (20) est comprise, qui présente au moins par endroits une configuration géométrique (22) correspondant à la surface intérieure (12) de la partie tête (10),
une pièce (40) est comprise, qui présente une ouverture de passage (41) pour le fluide à distribuer, par l'intermédiaire de laquelle dans un état d'actionnement (B) un afflux du fluide est permis entre la partie tête (10) et la soupape élastique (20) sous l'effet d'une déformation de la soupape élastique (20) avec formation d'un espace intermédiaire (10-20) entre la soupape élastique et la partie tête,
dans laquelle la partie tête (10) et la pièce (40) sont reliées par coopération de formes et à force y compris la soupape élastique (20) entre la partie tête (10) et la pièce (40), et la soupape élastique (20) dans un état logé (A) de la tête de pompage repose sur toute sa surface sur la surface intérieure (12) de la partie tête (10), de sorte qu'une étanchéité fluidique entre la partie tête (10) et la pièce (40) est garantie, dans laquelle la pièce (40) est reliée à son extrémité opposée à la soupape élastique (20) à la pièce (60), et
la soupape élastique comprend une tête (21a) et une paroi élastique (21b), dans laquelle la tête présente une configuration géométrique (22) correspondant à la surface intérieure (12) de la partie tête (10) et la paroi élastique (21b) est réalisée de manière déformable.

2. Tête de pompage (I) selon la revendication 1, **caractérisée en ce que** l'évidement (61) et le piston creux (70) sont cylindriques.

3. Tête de pompage (I) selon l'une quelconque des revendications précédentes, **caractérisée en ce que**
la pièce (60) comprend au moins un moyen (64) pour la fixation à un récipient de stockage (II), en particulier une liaison par encliquetage, une liaison par enclenchement ou un filet.

4. Tête de pompage (I) selon la revendication précédente, **caractérisée en ce que** la paroi élastique (21b)
présente au moins un point de flexion théorique (24), sur lequel la paroi (21b) élastique fléchit vers le bas ou l'intérieur passage de l'état logé (A) dans l'état d'actionnement (B), et/ou
est formée à partir d'un film d'un matériau élastiquement déformable, en particulier à partir d'un thermoplastique, caoutchouc et/ou silicone, de préférence avec une épaisseur de 0,03 à 1 mm, de préférence 0,08 à 0,5 mm, de manière particulièrement préférée 0,20 à 0,30 mm et/ou la tête (21a) est réalisée de manière massive.

5. Tête de pompage (I) selon l'une quelconque des revendications précédentes, **caractérisée en ce que** la tête (21a) et la paroi élastique (21b) sont réalisées d'une seule pièce.

6. Tête de pompage (I) selon l'une quelconque des revendications précédentes, **caractérisée en ce que** la soupape (20) élastique dispose d'au moins un élément de fixation (23), par l'intermédiaire duquel la soupape (20) élastique est reliée par coopération de forces à au moins un élément de fixation (43) correspondant de la pièce (40), dans laquelle de préférence l'élément de fixation (23) de la soupape (20) élastique et l'élément de fixation (43) de la pièce (40) sont réalisés sous la forme d'une liaison à encliquetage ou à enclenchement.

7. Tête de pompage (I) selon l'une quelconque des revendications précédentes, **caractérisée en ce que** la pièce (40) présente une paroi (42), qui ferme l'espace intermédiaire (10-20), dans laquelle une communication fluidique de l'espace intermédiaire (10-20) avec une zone (40-60) située au-delà de la paroi (42) vu à partir de l'espace intermédiaire (10-20) est permise par l'intermédiaire de l'ouverture de passage, dans laquelle en particulier l'ouverture de passage (41) est guidée à partir de la zone (40-60) directement à travers la paroi (42) et débouche dans la zone (10-20), ou
est amenée à passer dans la zone (40-60) à travers une paroi latérale (44) de la pièce (40), est guidée sur une surface extérieure de la pièce (40) dans une entaille qui peut être délimitée par la pièce (10), et, est à nouveau guidée dans la zone (10-20)à travers la paroi latérale de la pièce (40), et débouche dans la zone (10-20).

8. Tête de pompage (I) selon l'une quelconque des revendications précédentes, **caractérisée en ce qu'**un élément (30), qui exerce une force de rappel sur la soupape élastique (20), est disposé entre la soupape élastique (20) et la pièce (40), dans laquelle la force de rappel a pour effet que l'espace intermédiaire (10-20) réalisé dans l'état d'actionnement (B) est fermé en revenant dans l'état logé (A), dans laquelle l'élément (30) est en particulier un ressort.

9. Tête de pompage (I) selon l'une quelconque des revendications précédentes, **caractérisée en ce qu'**au moins un moyen (50) pour la filtration stérile de l'air entrant, en particulier un filtre bactérien, est présent entre la pièce (60) et un réservoir de stockage (II) pouvant être fixé sur la pièce (60) et/ou entre la pièce (40) et la pièce (60).

10. Tête de pompage (I) selon l'une quelconque des revendications précédentes, **caractérisée en ce que** la pièce (40) est fixe par rapport à la pièce (60).

11. Tête de pompage (I) selon l'une quelconque des revendications précédentes, **caractérisée en ce que** lors de la liaison de la tête de pompage (I) au réservoir de stockage (II) par l'intermédiaire de la pièce (60), un joint (80) est disposé entre la pièce (60) et le réservoir de stockage (II).

12. Tête de pompage (I) selon l'une quelconque des revendications précédentes, **caractérisée en ce que** la partie tête (10) comporte un matériau antibactérien, de préférence des métaux ou ions métalliques, en particulier des particules d'argent ou des ions argent.

13. Dispositif de dosage, comprenant une tête de pompage (I) reliée à un réservoir de stockage (II) selon l'une quelconque des revendications précédentes, dans lequel le réservoir de stockage (II) est réalisé de préférence sous la forme d'un flacon compressible.
